# EUROPEAN PATENT APPLICATION

(11) **EP 4 800 550 A1**
(43) Date of publication of application: **02.09.2026**
(21) Application number: 25161027.5
(22) Date of filing: 28.02.2025
(51) Int. Cl.: G06F 9/48, G06F 9/50, G06N 10/60, G06N 20/00

(54) **EFFICIENT RESOURCE ALLOCATION FOR ITERATIVE COMBINATORIAL OPTIMIZATION**

(71) Applicant: Siemens Aktiengesellschaft, 80333 München (DE)
(72) Inventor: Eder, Peter Josef, 80805 München (DE); Braun, Sarah, 80939 München (DE); Liu, Tong, 80796 München (DE)
(74) Representative: Siemens Patent Attorneys

(57) **Abstract**

A resource allocation method for iteratively improving a solution to a problem by combinatorial optimization including those not natively suited for quantum computers is proposed. Classical and quantum computing resources are provided. Starting from a solution in the search space following steps are repeated:
- deciding whether to use classical or quantum optimization
- in the case of classical optimization, calculating at least one classical estimator with a classical optimization algorithm on provided classical computing resources,
- in the case of quantum optimization, calculating at least one correlation matrix with a quantum optimization algorithm on provided quantum computing resources, and
- updating the solution based on at least one estimator or at least one correlation matrix. The method terminates when a termination criterium is met. The invention provides a flexible optimization problem solving approach for technical systems that can deal with a high level of complexity and overcomes the limitations of existing quantum optimization strategies, thereby offering promising avenues for tackling larger-scale and more complex optimization problems including those not natively suited for quantum computers.

## Description

The invention relates to a hybrid quantum-classical resource allocation method that iteratively improves solutions to combinatorial optimization problems, including those not natively suited for quantum computers.

The problem class of combinatorial optimization problems with integer decision variables has multiple applications. This class of problems addresses diverse real-world challenges, such as job shop scheduling, task assignment to computational resources, and logistics center operations. In logistics centers that coordinate a fleet of vehicles to fulfill customer requests, for instance, an efficient coordination of such a fleet is crucial. Here, the central task is to compute optimal routes and schedules for vehicles to minimize both cost and delivery time. This problem is often referred to as Vehicle Routing Problem (VRP).

As the scale of the technical system grows (e.g., the number of vehicles and goods increases in the logistic center), the optimization problem becomes challenging to solve and may be too complex to be tackled via traditional methods. State of the art methods are:
a) Classical exact algorithms
   There are several classical approaches to solving combinatorial optimization problems. For smaller problem instances, classical exact solution algorithms can be a good choice. These algorithms require formulating the problem as an integer program, which can then be solved using well-studied algorithms such as the simplex algorithm, branch-and-bound (B&B), or branch-and-cut. There are several solvers available, both open-source and commercial, that implement these algorithms along with efficient pre- and post-processing methods (Example: Gurobi software). Additionally, there are methods to improve scalability, for example through techniques like column generation, which is generally applicable. For many of the well-studied problem classes in combinatorial optimization, there are also problem-specific exact algorithms, for instance based on the concept of dynamic programming. An example would be the Held-Karp algorithm that has been developed for the traveling salesman problem.
b) Classical heuristics
   For larger problem instances, exact algorithms usually cannot achieve good solutions within acceptable computing times and heuristics are often employed. There are several popular heuristics commonly used for solving combinatorial optimization problems, for example Greedy Algorithms, Simulated Annealing, Genetic Algorithms, Tabu Search, Ant-Colony Optimization, Particle Swarm Optimization etc. However, these heuristics in general do not guarantee optimal solutions and may not even find near-to-optimal solutions. Furthermore, there is often a lack of certainty regarding convergence speed or solution quality when using these heuristics. Therefore, while they can be useful for tackling larger problems, they may not provide the desired level of accuracy or efficiency.

Furthermore, algorithms that utilize classical estimators to solve combinatorial problems already exist, such as the A* search algorithm and beam search. However, the A* search algorithm is limited to finding the shortest path in a network with obstacles and present applications of beam search are limited.

A state-of-the-art metaheuristic for optimization is the so-called Adaptive Large Neighborhood Search (ALNS) from (Ropke & Pisinger, 2006). Starting from an initial solution, it iteratively applies removal and construction operators to destroy and repair the current solution and obtain a new candidate solution until some stopping criterion is met. The corresponding removal and construction methods are chosen adaptively (hence the "A" in ALNS) depending on their prior success.

### c) Quantum search algorithms

Optimization problems on quantum computers have primarily been tackled using variational algorithms such as the Quantum Approximate Optimization Algorithm (QAOA) and Variational Quantum Eigensolver (VQE). However, current progress has been limited to proof-of-concept-sized problems (Harwood, 2021; Mohanty, 2023; Palackal, 2023). Despite major efforts, the solutions generated by these algorithms often lack feasibility and exhibit suboptimal quality. The inherent noise and constraints of the Noisy Intermediate-Scale Quantum (NISQ) era contribute to these shortcomings, hindering the scalability and accuracy of quantum optimization approaches.

### d) Quantum Informed Recursive Optimization

In response to these challenges, a recent paper proposed a novel strategy, called Quantum Informed Recursive Optimization (QIRO), to enhance solution construction by combining QAOA correlations (QAOA: quantum approximate optimization algorithm) with simple construction heuristics (Fingar, 2024). This approach leverages correlations as estimators during thež solution construction process, aiming to mitigate the impact of noise and improve solution quality. However, the algorithm merely constructs a solution and is not designed for iterative improvement, making it highly unlikely to find very good or optimal solutions.

A list of publications with state-of-the-art methods is provided at the end of the description.

There is a need for further improvement of optimization procedures that deal with complex systems.

The invention aims at a flexible optimization problem solving approach for technical systems that can deal with a high level of complexity and overcomes the limitations of existing quantum optimization strategies, thereby offering promising avenues for tackling larger-scale and more complex optimization problems.

Therefore, the problem to be tackled by the invention is to provide an improvement over current optimization schemes.

This problem is solved by the method according to claim 1.

Advantageous embodiments are described in the dependent claims.

The invention proposes a new resource allocation method for iteratively improving a solution to a problem that can be tackled via combinatorial optimization and may not be native to quantum computers. The optimization employs classical and quantum computing. Resource allocation refers to classical and quantum resources comprising classical and quantum computer resources as well as classical and quantum optimization software algorithms.

Preferably, the problem can be at least in part mathematically formulated as a combinatorial optimization problem with integer decision variables (such as MILP or QUBO). According to an embodiment, partial relaxation of the entire optimization problem is used permitting certain integer variables to assume continuous values, thereby integrating the impacts of secondary variables and constraints. A partial relaxation approach facilitates decomposing the problem into two components: a continuous problem solvable efficiently by classical computers and a challenging problem featuring only binary variables, suited for quantum computation.

The problem may relate to some complex task such as job shop scheduling, task assignment to computational resources, logistic center operations (e.g. vehicle routing problem), chip design, or infrastructure and building design. It may be used for urban planning or devising optimized airport or factory designs.

According to the inventive method (which can be considered a heuristic) a starting solution is iteratively improved, which can be associated with a path in the search space progressing step by step (or node by node) towards more optimal solutions (this does not exclude an optimization strategy that locally accepts steps that lead to an inferior solution but make sense in view of a more global optimization goal, e.g., avoiding a local minimum). At each step a decision is taken whether to use classical or quantum optimization. It is possible that the starting default is classical optimization. It is also imaginable that a step for which such a decision is taken comprises a plurality of updates, e.g. the first two nodes are dealt with via classical optimization, the next two ones via quantum optimization etc. It is also possible that a plurality of updates is only performed when classical optimization is employed. All these variants are within the scope of how the claims are to be construed.

The decision whether to use classical or quantum optimization
may be performed by help of a selection algorithm (the term "algorithm" is to be understood to comprise any suitable rule-based selection scheme). Concrete embodiments are selection algorithms based on Roulette-wheel selection, machine learning, local minimum detection, or optimization progress history tracking. Roulette-wheel selection can be employed in conjunction with a score value that measures whether corresponding previous resource employment was successful or not. For instance, each successful quantum optimization step (or each successful combination or 2-tuple of quantum optimization and choice of quantum optimization algorithm) is assigned a score of one or some other positive value, each quantum optimization step that did not lead to an improvement of the solution is assigned a score of zero or some other score that allows to categorize the step as disadvantageous. The average score would be considered whether to proceed with a quantum optimization step. Similarly, a quantum optimization step may be predicated on a classical optimization step or a series of classical optimization steps with no or little improvement for the solution. Also, a quantum optimization step could be performed when classical optimization is trapped in a local minimum. Several criteria when to do a quantum optimization step and when to do a classical one may be employed in combination, too. According to an embodiment, the selection algorithms take into account a cost factor for computing resources, e.g., a selection criterium is combined with a resource cost factor or indicator (for computing resources - availability, pricing, etc.).

Depending on the choice of resource for the ensuing step, calculations are performed. In the case of classical optimization, at least one classical estimator is calculated with a classical optimization algorithm on provided classical computing resources. In the case of quantum optimization, at least one correlation matrix is calculated with a quantum optimization algorithm on provided quantum computing resources. (In quantum optimization the term "quantum estimators" is used in the literature, too. Here, the term "correlation matrix" is to be construed to comprise these quantum estimators.)

Finally, an update of the solution is based on at least one estimator or at least one correlation matrix (this update may be imagined as next step or node in the solution space). Possibly, the preceding calculation did not lead to an improvement of the solution. In this situation an update could be tantamount to retaining the previous solution, but this is not necessarily so. For instance, in some scenarios an inferior solution may be accepted in view of a chosen optimization strategy such as avoiding a local minimum.

The iterations are terminated once a termination criterium is met. Ideally, the criterium consists of a measure for the quality of the solution, i.e. the solution complies to at least one requirement for effective deployment in practice. However, it is also possible that the method is terminated dependent on a limit for resource usage, e.g., number of steps (possibly with weights used for distinguishing between classical and quantum steps) or computing time.

The above concept introduces an advanced heuristic approach that explores more sophisticated estimator choices than present state-of-the-art methods. By incorporating insights from quantum correlations and classical optimization techniques, the proposed method seeks to overcome the limitations of existing quantum optimization strategies and quantum hardware, offering promising avenues for tackling larger-scale and more complex optimization problems.

The proposed hybrid quantum-classical resource allocation method iteratively improves solutions to combinatorial optimization problems, including those not natively suited for quantum computers, i.e., it extends the application scope of quantum computers.

According to an embodiment of the invention, at least one quantum step comprises partitioning the problem in sub-problems and calculating at least one correlation matrix with a quantum optimization algorithm on provided quantum computing resources for at least one sub-problem. It is possible that sub-problems are also treated classically, i.e., one part of the sub-problems are subjected to quantum calculations on a quantum computer and the other part is handled in a classical way. This separation can also depend on a resource cost factor, i.e., assignment of sub-problems to classical or quantum treatment is predicated on a resource cost factor. This embodiment provides for even more flexibility. Not only the partitioning but also the definition of sub-problems can be performed dependent on the availability of quantum computing resources. For instance, a problem may be tailored towards quantum computing tractability by omitting part of the problem or by (partial) relaxation. Both, the partitioning into sub-problems and the adaptation or shaping of sub-problems can be based on quantum correlation matrices. The information about adaptations of sub-problems for quantum treatment can fed back into the global optimization problem. Generally, correlation matrices can be employed as a flexible means to tweak combinatorial optimization for an optimal deployment of quantum computing resources in view of the prevalent hardware and cost constraints.

According to one embodiment, individual steps of the proposed methods may comprise the assignment of algorithms. These algorithms may be both classical or quantum algorithms. There may be a pool of algorithms the most suitable one is chosen from. Typically, a change of algorithm would be dependent on a criterium. For instance, a number of unsuccessful steps with a specific quantum algorithm of a quantum computer may trigger the replacement of the quantum algorithm with another quantum algorithm from the pool.

The invention also comprises a system for performing an inventive method which may comprise classical computing resources and quantum computing resources, a computer program that performs an inventive method when executed on a processor, and a computer program product with an inventive computer program stored thereon.

Below, the inventions is described based on an embodiment with reference to figures. The figures show
Fig. 1: Three components A, B, and C of the invention that constitute individual iterations,
Fig. 2: The invention applied to the Vehicle Routing Problem (VRP),
Fig. 3: the inventive heuristics as a basic tree search, and
Fig. 4: a proposed technique of decomposing and pre-processing the optimization problem to adjust its difficulty to available hardware resources.

Below, the Vehicle Routing Problem (VRP) is used as a primary example. However, the invention is not limited to this application but covers a broad range of further optimization scenarios.

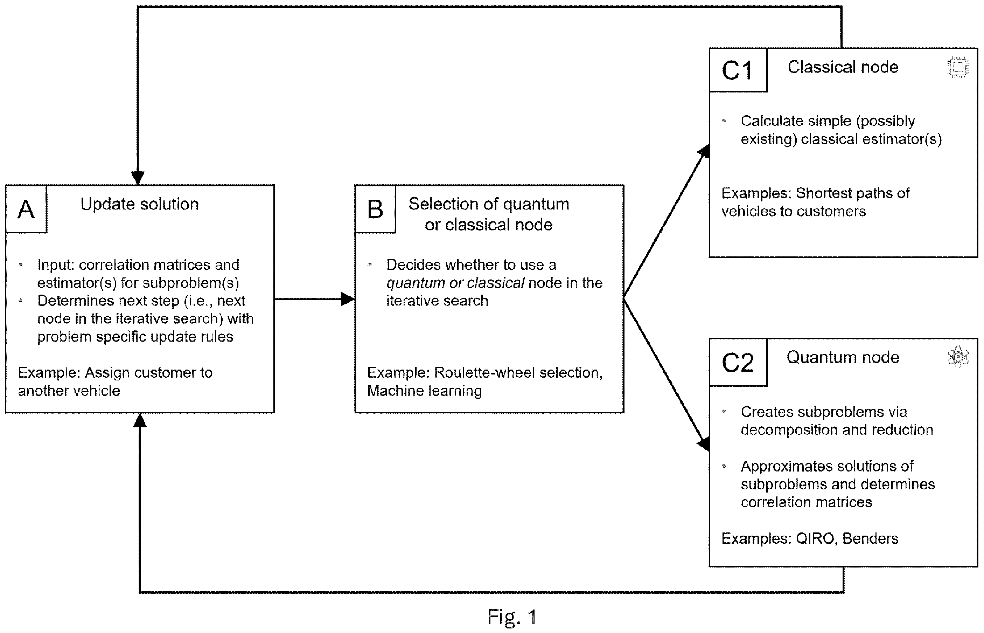

To deal with optimization problems, especially problems of a complexity that overtaxes traditional quantum but also classical optimization methods a hybrid heuristic is proposed. This heuristic combines classical search algorithms with quantum estimators and iteratively traverses the search space associated with the problem. The heuristic comprises the three steps A, B and C (C1 or C2) shown in Fig. 1, which are explained in detail and concretized with the example of a VRP as a concrete embodiment.
Step A: Based on given correlation matrices or estimators, the next step in the heuristic (i.e., the next node to be examined in the search) is determined.
Step B: A sophisticated selection algorithm determines when to use a quantum and when to use a classical node in the search heuristic.
Step C1: In every classical node, a simple classical estimator is evaluated.
Step C2: In every quantum node, one or multiple subproblems are selected and adapted, possibly using decomposition or reduction techniques to partition the problem according to the topology (i.e., qubit connectivity), technology (e.g., superconducting system, ion traps, ...), and size of the available hardware. With the corresponding quantum circuits and classical algorithms, correlation matrices are computed and used as input for the next iteration.

Thus, a vast search space of a complex optimization problem with integer decision variables can be tackled using quantum-enhanced search heuristics.

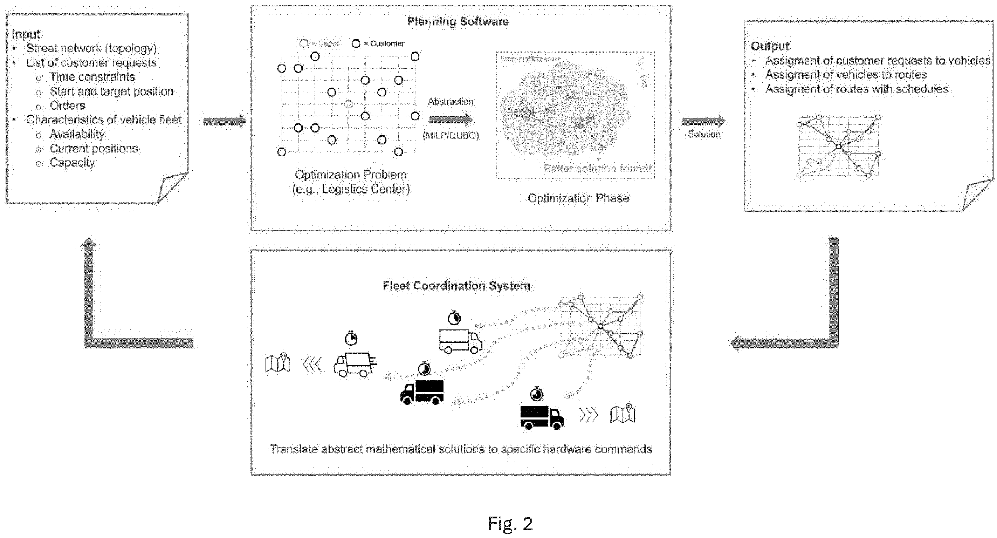

One such problem, as mentioned above, is the coordination of a fleet of vehicles in a logistics center, aiming to find the best assignment of vehicles to routes. Fig. 2 illustrates the deployment of the presents invention to this technical system. The concept described above in connection with Fig. 1 is implemented in a planning software. It obtains the input data from the fleet coordination system. This input data contains the street network topology, the list of customer requests including their time constraints, the start and target positions as well as order information. Besides, the characteristics of the vehicle fleet including the availability, current positions, and capacities of the vehicles are also provided. In the planning software, the input data is abstracted or formulated as an optimization problem, for instance as a Mixed Integer Linear Program (MILP) or Quadratic Unconstrained Binary Optimization (QUBO) problem and solved in the optimization phase by the invented search heuristic. There are plenty of MILPs available in literature for all kinds of optimization problems. The transformation to a QUBO can be done with, e.g., Qiskit. The output solution takes account of the assignment of the customer, requests to the vehicles. The vehicles are assigned to the designated routes, and each route follows a certain schedule. This output is then fed back into the fleet coordination system, which translates the abstract solutions into hardware commands or human instructions.

In the following, we will outline in more detail how the inventive approach tackles the optimization phase. As already illustrated in Fig. 1, it comprises three major parts: Problem-specific solution updates (A), the sophisticated selection of quantum nodes (B), and an adequate choice of subproblems, algorithms and hardware (C).

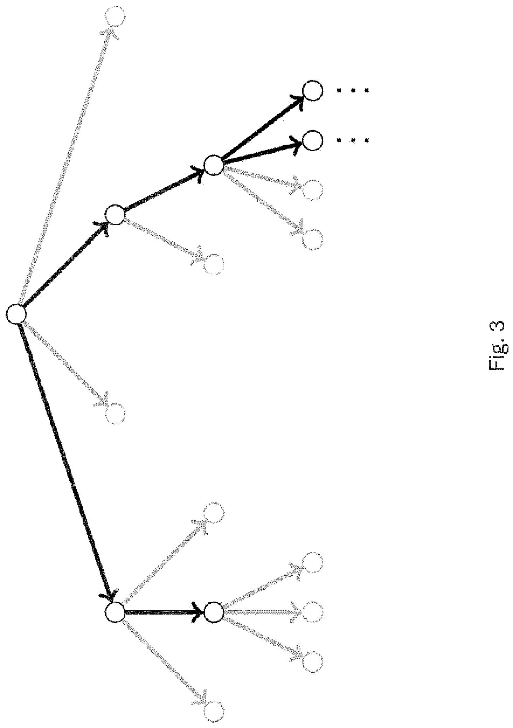

The core heuristic (i.e., part A of Fig. 1) can be as straightforward as conducting a basic tree search, with either classical or quantum estimators guiding the update choices. This approach is schematically illustrated in Fig. 3, which shows that the search heuristic according to the invention can be based on a search tree. Not all calculated nodes represent an improvement over the previous one. The nodes that meet this criterium are shown as full circles. The nodes that are chosen to be further explored in the following iterations are shown as black circles.

The overarching idea is to systematically explore/traverse the search space, which is represented by a tree in Fig. 3. The tree search is an incomplete search, making it an approximate method. The procedure begins by exploring the root of the search tree and generating all child nodes. From these children, a limited number of promising candidates are expanded and only the best among the generated children, which are selected by the estimator, are further pursued. The process continues until satisfactory solutions are found. In a scenario like solving a VRP using a tree search, the algorithm begins with the given layout of customers and vehicles, shifting one vehicle at a time. Other strategies like ALNS (Adaptive Large Neighborhood Search), commonly used for VRPs, can also come into play. Essentially, any heuristic approach that allows for integrating an estimator to make decisions can be used. Other options include Simulated Annealing, Genetic Algorithms, or Ant-Colony heuristics.

Hence, the heuristic operates similarly to traditional classical methods by traversing the search space and deriving problem-specific metrics, termed estimators, to guide the next steps. In classical approaches, these estimators can take various forms, such as straightforward evaluations like estimated arrival times via shortest paths or prioritizing urgent requests (see Point C1 in Figure 1). Another method involves exploring all potential updates to identify the step that best advances the objective. For quantum estimators, an option is using a low-depth QAOA (Quantum Approximate Optimization Algorithm) that solves the entire problem or a simplified version up to a certain, though not necessarily optimal, approximation ratio. Then, instead of identifying the most frequent bit-string as a complete solution, you measure and evaluate the expectation values of the qubits and their correlations in the circuit and use them to apply update rules to advance the heuristic one step further. One should note that combining heuristics with quantum estimators allows to solve simplified versions of the large-scale problems, thereby enabling the use of NISQ quantum hardware and positioning quantum computing as a valuable tool for optimization in the near future.

To maximize the combined strengths of both classical and quantum computers most efficiently, specific techniques can be employed, such as Roulette Wheel selection, Score-based selection, Machine learning or bandit-based selection (i.e., Point B in Fig. 1). These techniques help pinpoint critical nodes where quantum computers can efficiently tackle suitable (sub)problems (nodes shown as solid circles with quantum icons in Fig. 2), leading to superior or even optimal solutions more rapidly. Consequently, our approach further facilitates the efficient utilization of sparse quantum hardware (e.g., in a quantum cloud), eliminating the need to access quantum resources at every computational step. Additionally, we can dynamically select the most suitable quantum algorithms from a diverse pool of options (such as Annealing, Grover Adaptive Search, QAOA, VQE, and more) based on our predefined rules. This is particularly valuable, given that identifying problem structures that yield a quantum advantage remains an unsolved problem in current research. For instance, in Roulette Wheel selection, each quantum and classical estimator is assigned a probability that varies over time based on its success, enabling us to choose the best-performing algorithm at any given moment.

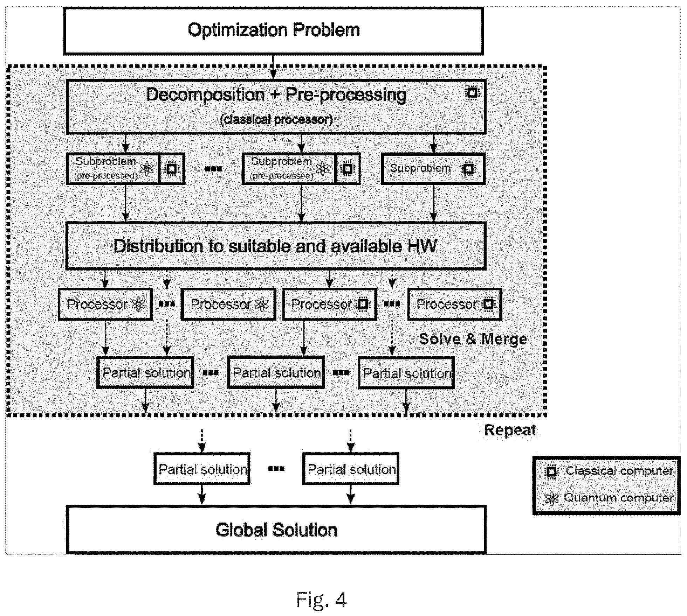

Finally, a dynamic tuning mechanism or pre-processing technique adjusts the optimization problem's difficulty in response to available hardware resources (i.e., Point C in Figure 1) in every quantum node of the search heuristics is deployed. Initially, secondary constraints, such as time windows restricting goods' arrival times or fleet capacity limits, may be disregarded. Moreover, the option of decomposing the problem into sub-problems (e.g., via vehicle clustering) tailored to the quantum hardware topology or expected to benefit from Grover's speedup can be explored. Subsequently, a promising solution update (e.g., moving a vehicle) is selected, considering the previously omitted constraints. A high-level illustration of the strategy for each step in the heuristic is shown in Fig. 4 and explained in more detail below. Merging the solutions in the end is optional, as the heuristic approach can proceed without a full solution. Fig. 4 schematically shows the proposed technique of decomposing and pre-processing the optimization problem in order to adjust its difficulty to available hardware resources.

A possible extension is the partial relaxation of the entire optimization problem permitting certain integer variables to assume continuous values, thereby integrating the impacts of secondary variables and constraints. This approach facilitates decomposing the problem into two components: a continuous problem solvable efficiently by classical computers and a challenging problem featuring only binary variables, suited for quantum computation. Specialized iterative decomposition techniques, such as Benders algorithm or column generation, can then be employed to address these subproblems effectively. The former was specifically designed for separating continuous from binary variables and the latter can be adapted to do so. (J., 2022)

The proposed approach makes it possible to combine well-established classical search algorithms and quantum estimators in such a way that both classical and near-future quantum computational resources can be fully exploited. As a result, technical problems such as mentioned above can be solved efficiently.

### List of references:

Alexandra E. Moylett, N. L. (2016). Quantum speedup of the Travelling Salesman Problem for bounded-degree graphs.
Chen, Z.-X. S.-H.-Y.-W.-C. (2024). A polynomial-time quantum algorithm for solving the ground states of a class of classically hard Hamiltonians.
Finžgar, J. R. (2024). Quantum-Informed Recursive Optimization Algorithms. PRX Quantum.
Harwood, S. (2021). Formulating and Solving Routing Problems on Quantum Computers. IEEE Transactions on Quantum Engineering.
J., O.-C. a.-B. (2022). Optimization of a refinery scheduling process with column generation and a quantum annealer. (S. 1471-1488). Springer Optimization and Engineering.
Layden, D. M. (2023). Quantum-enhanced Markov chain Monte Carlo. Nature.
Lukin, M. C.-G. (2023). Quantum speedup for combinatorial optimization with flat energy landscapes.
Mohanty, N. (2023). Analysis of The Vehicle Routing Problem Solved via Hybrid Quantum Algorithms in Presence of Noisy Channels. arXiv.
Montanaro, A. (2020). Quantum speedup of branch-and-bound algorithms. Physical Review Research.
Niklas Pirnay, V. U.-P. (2024). An in-principle super-polynomial quantum advantage for approximating combinatorial optimization problems via computational learning theory.
Palackal, L. (2023). Quantum-Assisted Solution Paths for the Capacitated Vehicle Routing Problem. Fraunhofer Publica.
Ropke, S., & Pisinger, D. (2006). An Adaptive Large Neighborhood Search Heuristic for the Pickup and Delivery Problem with Time Windows. Transportation Science, 18.

## Claims

1. A resource allocation method for iteratively improving a solution to a problem by combinatorial optimization, comprising
- providing classical computing resources;
- providing quantum computing resources;
- determining a starting solution; and
- repeating the steps of
- - deciding whether to use classical or quantum optimization,
- - in the case of classical optimization, calculating at least one classical estimator with a classical optimization algorithm on provided classical computing resources,
- - in the case of quantum optimization, calculating at least one correlation matrix with a quantum optimization algorithm on provided quantum computing resources, and
- - updating the solution based on at least one estimator or at least one correlation matrix,
until a termination criterium is met.

2. The method of claim 1, wherein the problem is at least in part mathematically formulated as a combinatorial optimization problem with integer decision variables.

3. The method of claim 2 or 3, wherein the problem relates to one of: job shop scheduling, task assignment to computational resources, logistic center operations, chip design, infrastructure design, building design, airport design, factory design and urban planning.

4. The method of one of the preceding claims, wherein the step
- - deciding whether the next step is dealt with by classical or quantum optimization is performed by help of a selection algorithm.

5. The method of claim 4, wherein
Roulette-wheel selection, machine learning, local minimum detection, or optimization progress history tracking is used.

6. The method of claim 4 or 5, wherein
a cost factor for computing resources is taken into account by the selection algorithm.

7. The method of one of the preceding claims, wherein
at least for one iteration,
- at least one correlation matrix is computed with a quantum optimization algorithm on provided quantum computing resources, including
- partitioning the problem in sub-problems, and
- calculating at least one correlation matrix for at least one sub-problem with the quantum optimization algorithm on provided quantum computing resources.

8. The method of claim 7, wherein
the partitioning of the problem in sub-problems and/or the definition of sub-problems is performed in view of the availability of quantum computing resources.

9. The method of claim 8, wherein
correlation matrixes are calculated for sub-problems and used to perform the partitioning of the problem in sub-problems and/or the definition of suitable sub-problems.

10. The method of one of the claims 7 to 9, wherein
sub-problems are assigned to classical or quantum treatment dependent on a resource cost factor.

11. The method of one of the preceding claims, wherein
the problem was cast into the mathematical form of MILP or QUBO.

12. The method of one of the preceding claims, comprising
assigning a classical algorithm and a quantum algorithm for calculating at least one estimator and at least one correlation matrix, respectively.

13. The method of claim 12, comprising
reassigning a classical algorithm or a quantum algorithm depending on the performance of the previous algorithm.

14. The method of one of the preceding claims, wherein
partial relaxation is used.

15. A system for performing a method according to one of the claims 1 to 14.

16. The system of claim 15, comprising
classical computing resources and quantum computing resources.

17. Computer program that performs a method according to one of the claims 1 to 14 when executed on a processor.

18. Computer program product with a computer program according to claim 17.
